# EUROPEAN PATENT SPECIFICATION

(11) **EP 0 953 910 B1**
(45) Date of publication and mention of the grant of the patent: **03.11.2010**
(21) Application number: 99107745.4
(22) Date of filing: 19.04.1999
(51) Int. Cl.: G06F 11/00

(54) **Method and apparatus for controlling write access to storage means for a digital data processing circuit**
Verfahren und Vorrichtung zur Überwachung der Schreibzugriffe zu einer Speichervorrichtung für eine digitale Datenverarbeitungsschaltung
Méthode et dispositif pour controller l'accès d'écriture à des moyens de stockage pour un circuit de traitement de données numériques

(30) Priority: 30.04.1998 EP 98250147
(43) Date of publication of application: 03.11.1999
(73) Proprietor: Thomson Licensing, 92130 Issy-les-Moulineaux (FR)
(72) Inventor: Adolph, Dirk, 30952 Ronnenberg (DE); Schiller, Harald, 30539 Hannover (DE)
(74) Representative: Hartnack, Wolfgang

(56) References cited:
- WO-A-96/38775
- GB-A- 2 222 899
- US-A- 5 421 006

## Description

The invention relates to a method and to an apparatus for controlling write access to storage means for a digital data processing circuit.

### Background

Integrated circuits (IC) for digital audio and/or video data (AV) processing typically contain several sub-units which must be configured by set-up software before they can operate in one or several modes of operation.

The microcontroller for the set up and control of the sub-units can either be an external one in a separate IC, or, on some AV ICs, it will be integrated as an internal CPU core.

WO 96/38775 discloses direct CPU-controlled write access to a memory in order to avoid the use of invalid or un-intended address values for that memory during a specific mode.

### Invention

The software to run on such AV ICs may contain imperfections for several reasons like:
- During the software development phase when implementation and debugging is not yet complete.
- Even for product software, testing can not be extensive, i.e. can not cover 100% of all possible situations, as a matter of sheer complexity.
- The AV IC may be operated in an environment where foreign, i.e. uncontrollable software is downloaded and runs on the IC.

A very frequent bug in developing driver software to run on AV decoder ICs is caused by un-initialised pointers and addresses. Such bugs have severe consequences at runtime.

Amongst the worst of these is the inadvertent writing to device set-up registers which are typically memory-mapped into the general address space of the IC.
Adding debug software for monitoring un-initialised pointers and addresses will typically slow down the software performance to such an extent that this is no longer representative for the real-time behaviour of the IC. Also, typically, such monitoring debug software does give no indication on *who* generated the illegal or unintended register access.
The typical operation of AV processing ICs has distinct phases or modes, where
1) in an initialisation phase or mode registers are set up according to the desired functionality using dedicated set up software;
2) in a normal decoding phase or mode the content of all or parts of these registers will not be changed any more; the values they hold will merely govern the decoding and data processing that is carried out within the IC.

In both kind of modes it may happen that the IC is operated with downloaded foreign software which has write access to such registers into which the original software would not write or concerning which the original software assumes in the normal decoding mode to contain certain original values.

It is one object of the invention to disclose a method for preventing, when running application software, the writing of data in case of invalid pointers or address values and for indicating the source of an illegal or unintended address value. This object is achieved by the method disclosed in claim 1.

It is a further object of the invention to disclose an apparatus which utilises the inventive method. This object is achieved by the apparatus disclosed in claim 5.

The invention concerns a hardware addition to the register write access logic, by which write accesses can be deliberately allowed (enabled) or disallowed (disabled) for distinct periods of time.
Advantageously this additional hardware can be very small and cheap. The output of a CPU controlled 1-bit RegisterWriteAllowed register is combined in an AND function with the normal WriteEnable signal in order to form a ProtectedWriteEnable signal for the subsequent data storage means to be controlled. There may be two additional CPU commands for setting and resetting the RegisterWriteAllowed register.

Since typically both above mentioned operation phases exist, write allowance will have to change only rarely, hence real-time performance is deteriorated only neglectably.

In addition to blocking any write processes, an extended version of the inventive add-on hardware can be incorporated such as to trigger an interrupt, which can signal that an illegal write attempt has occurred.

In a further embodiment of the invention, in case of such interrupt, the address of the current CPU command is captured into a dedicated register, which allows to retrieve who, i.e. which part of the application software, generated the unintended register access.

In principle, the inventive method is suited for controlling write access to storage means for a digital data processing circuit which can be operated in an initialisation mode before operating in a normal processing mode, wherein in order to avoid the use of invalid or un-intended address values or pointers for said storage means during said normal processing mode, at least one write enable signal is conditionally passed to said storage means under the control of an associated RegisterWriteAllowed register output signal, in particular by using an AND function.

Advantageous additional embodiments of the inventive method are disclosed in the respective dependent claims.

In principle the inventive apparatus for controlling write access to storage means for a digital data processing circuit, which can be operated in an initialisation mode before operating in a normal processing mode, includes:
- storage means control means providing at least one read enable signal and at least one write enable signal for said storage means;
- combining means, in particular an AND gate, for conditionally passing said at least one write enable signal to said storage means under the control of an associated RegisterWriteAllowed register output signal in order to avoid the use of invalid or unintended address values or pointers for said storage means during said normal processing mode.

Advantageous additional embodiments of the inventive apparatus are disclosed in the respective dependent claims.

### Drawings

Embodiments of the invention are described with reference to the accompanying drawings, which show in:
Fig. 1 known data storage control;
Fig. 2 inventive add-on for data storage write enabling.

### Exemplary embodiments

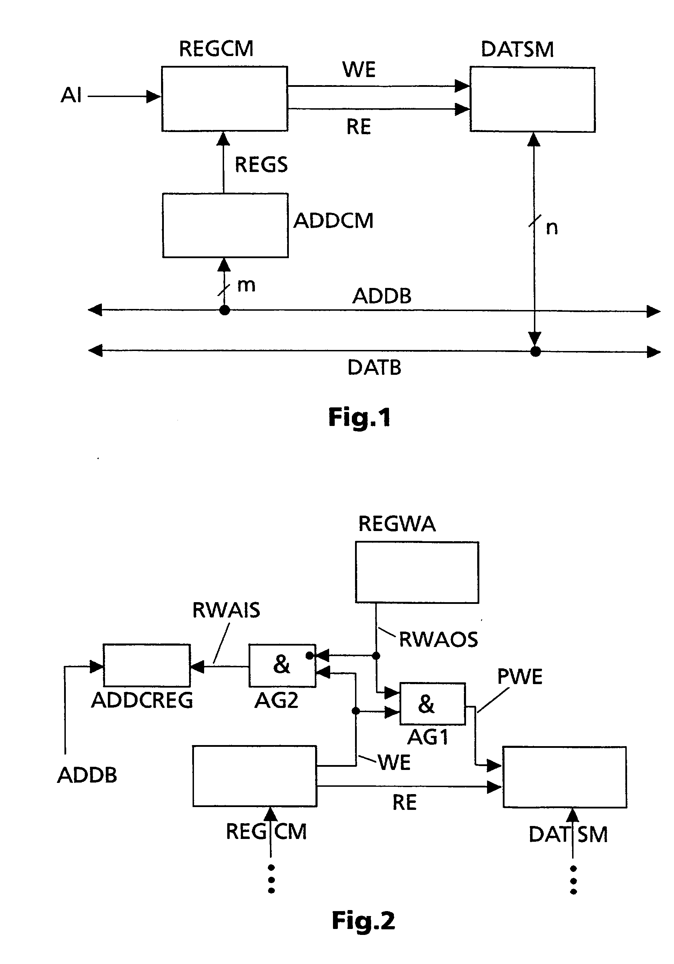

Within digital AV ICs the set-up registers and their control logic will typically consist of the means depicted in Fig 1. Address comparison means ADDCM, which are connected via an m-bit connection to an address bus ADDB, generate a RegisterSelected signal REGS whenever one of the dedicated register addresses appears on the address bus ADDB. Register control means REGCM, which use the REGS signal and additional information AI from the command processing of an internal or external microcontroller, generate therefrom write enable WE and read enable RE signals for data storage means DATSM. DATSM is connected via an n-bit connection to a data bus DATB and embodies e.g. a set-up register memory, the writing into which and reading out of which is controlled by the WE and RE signals. 'n' and 'm' are possibly different integer numbers indicating the width of the address and data bus, respectively.

In the first inventive embodiment according to Fig 2, a first AND gate AG1 and an 1-bit RegisterWriteAllowed register REGWA is added. REGCM and DATSM correspond to the blocks of the same name in Fig. 1. Two additional CPU commands allow to set and to reset register REGWA. The first AND gate AG1 combines the write enable signal WE from REGCM with the 1-bit output signal RWAOS of register REGWA into a protected write enable signal PWE which is used instead of WE to control the set-up register/data storage means DATSM.

Optionally a second AND gate AG2, or a corresponding logic hardware function, combines the write enable signal WE and the inverted RegisterWriteAllowed output signal RWAOS into a RegisterWriteAttempt interrupt signal RWAIS. RWAIS indicates that a write attempt has been made in a phase where register writes had been explicitely disallowed.

As a further embodiment an address capturing register ADDCREG which is controlled by the RWAIS signal stores the current CPU command address from the address bus of the external or internal microcontroller whenever the RWAIS interrupt occurs. The ADDCREG register can be read out for debug purposes.

The invention can be used for example in a DVD player or in connection with any other digital processing IC beyond AV processing, which includes the dedicated set-up and normal operation phases as described above.

The initialisation mode can take place when manufacturing a device containing the IC or when e.g. the power of the device or IC is switched on by a user or when the device or IC becomes switched to a different operation mode. Different parts of the complete initialisation mode may be carried out during several of these opportunities.

## Claims

1. Method for controlling write access to storage means (DATSM) in a digital data processing circuit that includes a microcontroller, which data processing circuit can be operated in an initialisation mode before operating in a normal processing mode and wherein, in order to avoid the use of invalid or un-intended address values or pointers for said storage means (DATSM) during said normal processing mode, a write enable (WE) signal is conditionally passed to said storage means,
**characterised in that** said write enable signal (WE) is controlled (ADDCM, REGS, REGCM) by a related register address on an address bus (ADDB) of said microcontroller and is further controlled (AG1) by an associated write allowance output signal (RWAOS) output from a register (REGWA),
wherein said write enable signal and said write allowance output signal are further combined (AG2) in order to form a write attempt interrupt signal (RWAIS), said write attempt interrupt signal (RWAIS) controlling an address capturing register (ADDCREG) that stores the current address on said address bus (ADDB).

2. Method according to claim 1, wherein said further controlling (AG1) is performed by using an AND function.

3. Method according to claim 1 or 2, wherein in said further combining (AG2) the inverted write allowance register output signal (RWAOS) is used, in particular in an AND function.

4. Method according to one of claims 1 to 3, wherein said write allowance output signal (RWAOS) stems from a 1-bit write allowance register (REGWA) which is set and reset by a dedicated CPU command.

5. Apparatus for controlling write access to storage means (DATSM) in a digital data processing circuit that includes a microcontroller, which data processing circuit can be operated in an initialisation mode before operating in a normal processing mode and wherein, in order to avoid the use of invalid or un-intended address values or pointers for said storage means (DATSM) during said normal processing mode, a write enable (WE) signal is conditionally passed to said storage means, **characterised by**:
- storage means control means (ADDCM, REGS, REGCM) providing a read enable signal (RE) and a write enable signal (WE) for said storage means (DATSM), wherein said write enable signal is controlled by a related register address on an address bus (ADDB) of said microcontroller;
- first combining means (AG1) which further control said write enable signal by an associated write allowance output signal (RWAOS) output from a register (REGWA);
- second combining means (AG2) which further combine said write enable signal and said write allowance output signal in order to form a write attempt interrupt signal (RWAIS), said write attempt interrupt signal (RWAIS) controlling an address capturing register (ADDCREG) that stores the current address on said address bus (ADDB).

6. Apparatus according to claim 5, wherein said first combining means (AG1) has an AND function.

7. Apparatus according to claim 5 or 6, wherein said second combining means (AG2) combine said write enable signal (WE) with the inverted write allowance register output signal, said second combining means having in particular an AND function.

8. Apparatus according to one of claims 5 to 7, including a 1-bit write allowance register (REGWA) which is set and reset by a dedicated CPU command and which provides said write allowance output signal (RWAOS).

## Patentansprüche

1. Verfahren zum Steuern des Schreibzugriffs zu Speichermitteln (DATSM) in einer einen Mikrokontroller enthaltenden digitalen Datenverarbeitungsschaltung, die in einem Vorbereitungsbetrieb vor dem Arbeiten in einem normalen Verarbeitungsbetrieb betrieben werden kann, und wobei zur Vermeidung der Verwendung von ungültigen oder unbeabsichtigten Adresswerten oder Zeigern für die Speichermittel (DATSM) während des normalen Verarbeitungsbetriebs ein Schreibfreigabesignal (WE) bedingt den Speichermitteln zugeleitet wird,
**dadurch gekennzeichnet, dass** das Schreibfreigabesignal (WE) durch eine verbundene Registeradresse auf einem Adressenbus (ADDB) des Mikrokontrollers gesteuert wird (ADDCM, REGS, REGCM) und weiter durch ein zugehöriges Schreiberlaubnis-Ausgangssignal (RWAOS) gesteuert wird (AG1), das von einem Register (REGWA) ausgegeben wird,
wobei das Schreibfreigabesignal ferner mit dem Schreiberlaubnis-Ausgangssignal kombiniert wird (AG2), um ein Schreibversuchs-Unterbrechungssignal (RWAIS) zu bilden, das ein Adressen-Fangregister (ADDCREG) steuert, das die aktuelle Adresse auf dem Adressenbus (ADDB) speichert.

2. Verfahren nach Anspruch 1, bei dem die weitere Steuerung (AG1) unter Verwendung einer UND-Funktion ausgeführt wird.

3. Verfahren nach Anspruch 1 oder 2, bei dem bei dem weiteren Kombinieren (AG2) das invertierte Schreiberlaubnis-Registerausgangssignal (RWAOS) verwendet wird, insbesondere in einer UND-Funktion.

4. Verfahren nach einem der Ansprüche 1 bis 3, bei dem das Schreiberlaubnis-Ausgangssignal (RWAOS) auf ein Ein-Bit-Schreiberlaubnisregister (REGWA) zurückgeht, das durch einen dedizierten CPU-Befehl gesetzt und zurückgesetzt wird.

5. Vorrichtung zur Steuerung des Schreibzugriffs zu Speichermitteln (DATSM) in einer einen Mikrokontroller enthaltenden digitalen Datenverarbeitungsschaltung, die in einem Vorbereitungsbetrieb vor dem Arbeiten in einem normalen Verarbeitungsbetrieb betrieben werden kann, und wobei zur Vermeidung der Verwendung von ungültigen oder unbeabsichtigten Adresswerten oder Zeigern für die Speichermittel (DATSM) während des normalen Verarbeitungsbetriebs ein Schreibfreigabesignal (WE) bedingt den Speichermitteln zugeleitet wird, **gekennzeichnet durch**:
- Steuermittel (ADDCM, REGS, REGCM) für die Speichermittel, die ein Lesefreigabesignal (RE) und ein Schreibfreigabesignal (WE) für die Speichermittel (DATSM) liefern, wobei das Schreibfreigabesignal **durch** eine verbundene Registeradresse auf einem Adressenbus (ADDB) des Mikrokontrollers gesteuert wird;
- erste Kombinationsmittel (AG1), die ferner das Schreibfreigabesignal **durch** ein zugehöriges Schreiberlaubnis-Ausgangssignal (RWADS) steuern, das von einem Register (REGWA) ausgegeben wird;
- zweite Kombinationsmittel (AG2), die ferner das Schreibfreigabesignal mit dem Schreiberlaubnis-Ausgangssignal kombinieren, um ein Schreibversuchs-Unterbrechungssignal (RWAIS) zu bilden, das ein Adressen-Fangregister (ADDCREG) steuert, das die aktuelle Adresse auf dem Adressenbus (ADDB) speichert.

6. Vorrichtung nach Anspruch 5, bei der die ersten Kombinationsmittel (AG1) eine UND-Funktion haben.

7. Vorrichtung nach Anspruch 5 oder 6, bei der die zweiten Kombinationsmittel (AG2) das Schreibfreigabesignal (WE) mit dem invertierten Schreiberlaubnis-Registerausgangssignal kombinieren, das insbesondere eine UND-Funktion hat.

8. Vorrichtung nach einem der Ansprüche 5 bis 7, die ein Ein-Bit-Schreiberlaubnisregister (REGWA) enthält, das durch einen dedizierten CPU-Befehl gesetzt und zurückgesetzt wird, und das das Schreiberlaubnis-Ausgangssignal (RWAOS) liefert.

## Revendications

1. Méthode pour contrôler l'accès d'écriture à des moyens de stockage (DATSM) dans un circuit de traitement de données numériques incluant un microcontrôleur, lequel circuit de traitement de données peut être utilisé selon un mode d'initialisation avant une utilisation selon un mode de traitement normal et où, afin d'éviter l'utilisation de valeurs ou de pointeurs d'adresse non valides ou non souhaités pour lesdits moyens de stockage (DATSM) lors dudit mode de traitement normal, un signal d'activation d'écriture (WE) est transmis conditionnellement auxdits moyen de stockage,
**caractérisé en ce que** ledit signal d'activation d'écriture (WE) est contrôlé (ADDCM, REGS, REGCM) par une adresse de registre associée sur un bus d'adresses (ADDB) dudit microcontrôleur et est en outre contrôlé (AG1) par un signal de sortie d'autorisation d'écriture associé (RWAOS) émis à partir d'un registre (REGWA),
où ledit signal d'activation d'écriture et ledit signal de sortie d'autorisation d'écriture sont en outre combinés (AG2) afin de former un signal d'interruption de tentative d'écriture (RWAIS), ledit signal d'interruption de tentative d'écriture (RWAIS) contrôlant un registre de capture d'adresses (ADDCREG) stockant l'adresse actuelle sur ledit bus d'adresses (ADDB).

2. Méthode selon la revendication 1, où ledit contrôle supplémentaire (AG1) est réalisé à l'aide d'une fonction AND.

3. Méthode selon la revendication 1 ou 2, où dans ladite combinaison supplémentaire (AG2), le signal de sortie de registre d'autorisation d'écriture inversé (RWAOS) est utilisé, en particulier dans une fonction AND.

4. Méthode selon une des revendications 1 à 3, où ledit signal de sortie d'autorisation d'écriture (RWAOS) provient d'un registre d'autorisation d'écriture 1 bit (REGWA) initialisé et réinitialisé par une commande CPU dédiée.

5. Dispositif pour contrôler l'accès d'écriture à des moyens de stockage (DATSM) dans un circuit de traitement de données numériques incluant un microcontrôleur, lequel circuit de traitement de données peut être utilisé selon un mode d'initialisation avant une utilisation selon un mode de traitement normal et où, afin d'éviter l'utilisation de valeurs ou de pointeurs d'adresse non valides ou non souhaités pour lesdits moyens de stockage (DATSM) lors dudit mode de traitement normal, un signal d'activation d'écriture (WE) est transmis conditionnellement auxdits moyen de stockage, **caractérisé par** :
- des moyens de contrôle de stockage (ADDCM, REGS, REGCM) fournissant un signal d'activation de lecture (RE) et un signal d'activation d'écriture (WE) pour lesdits moyens de stockage (DATSM), où ledit signal d'activation d'écriture est contrôlé par une adresse de registre associée sur un bus d'adresses (ADDB) dudit microcontrôleur ;
- un premier moyen de combinaison (AG1) contrôlant en outre ledit signal d'activation d'écriture par un signal de sortie d'autorisation d'écriture associé (RWAOS) émis à partir d'un registre (REGWA) ;
- un deuxième moyen de combinaison (AG2) combinant en outre ledit signal d'activation d'écriture et ledit signal de sortie d'autorisation d'écriture afin de former un signal d'interruption de tentative d'écriture (RWAIS), ledit signal d'interruption de tentative d'écriture (RWAIS) contrôlant un registre de capture d'adresses (ADDCREG) stockant l'adresse actuelle sur ledit bus d'adresses (ADDB).

6. Dispositif selon la revendication 5, où ledit premier moyen de combinaison (AG1) possède une fonction AND.

7. Dispositif selon la revendication 5 ou 6, où ledit deuxième moyen de combinaison (AG2) combine ledit signal d'activation d'écriture (WE) avec le signal de sortie de registre d'autorisation d'écriture inversé, ledit deuxième moyen de combinaison possédant en particulier une fonction AND.

8. Dispositif selon une des revendications 5 à 7, incluant un registre d'autorisation d'écriture 1 bit (REGWA) initialisé et réinitialisé par une commande CPU dédiée et fournissant ledit signal de sortie d'autorisation d'écriture (RWAOS).
